# EUROPEAN PATENT APPLICATION

(11) **EP 3 216 938 A1**
(43) Date of publication of application: **13.09.2017**
(21) Application number: 15857310.5
(22) Date of filing: 04.11.2015
(51) Int. Cl.: E04C 1/40

(54) **METHOD FOR PRODUCING CONSTRUCTION PARTS, USING WASTE FROM NATURAL STONE AND/OR MINERAL WASTE, AND/OR PLANT, ANIMAL OR INDUSTRIAL WASTE, AND PART OBTAINED**

(30) Priority: 05.11.2014 ES 201431623
(71) Applicant: Naies, Marie Michele, 65000 Tarbes (FR)
(72) Inventor: ABAD GONZALEZ, Ricardo, F-65000 Tarbes (FR)
(74) Representative: Isern-Jara, Nuria
(86) International application number: PCT/ES2015/070788
(87) International publication number: WO 2016/071551

(57) **Abstract**

A method and a component piece made from materials of natural and/or mineral stone residues, binders and additives and/or vegetable residues and/or animal residues and/or industrial residues that can be used in several applications in the construction sector, such as, for example, in the manufacturing of kitchen countertops, wall coverings, thermally insulated and/or soundproof panels, etc. During the method the mold is heated which improves the quality of the final piece obtained.

## Description

### OBJECT OF THE INVENTION

The object of the present invention patent application is the registration of a method for manufacturing component pieces, with natural and/or mineral stone residues, vegetable residues and/or animal residues and/or industrial residues, binders and additives which incorporates notable innovations and advantages.

More specifically, the invention proposes the development of a method and a component piece that can be used in several applications in the construction sector, such as, for example, in the manufacturing of kitchen countertops, wall coverings, thermally insulated and/or soundproof panels, etc.

### BACKGROUND OF THE INVENTION

Several processes for obtaining component pieces via molding techniques are known in the state of the art, based on hardening a mixture that consists of using natural stone residues together with a binder and additives that are deposited in a mold, which allows for obtaining a piece, for example, a slab- or cube-shaped piece with previously established sizes. As a binder, polyester resin is usually used together with polymerization catalysis activators which accelerates and hardens the mixture.

However, the use of this binder brings with it a series of disadvantages, among which is the fact that the styrene-containing polyester resin is toxic, causing severe infections if it comes into contact with the skin; the fact that when cutting and handling the obtained piece it creates a toxic dust that can be inhaled by the worker; its outermost layer does not maintain its color when exposed to adverse weather conditions; it is a combustible material and it has high costs, which affects the manufacturing costs of the component pieces.

In addition, the applicant is currently unaware of the existence of an invention that has all the characteristics described herein.

### DESCRIPTION OF THE INVENTION

The present invention has been developed with the aim of providing a manufacturing method and a component piece obtained with said method that constitutes a novelty within the field of application, and solves the disadvantages mentioned above while also contributing other additional advantages, which will become evident from the description provided below.

The object of the present invention is to therefore provide a manufacturing method for component pieces, with natural and/or mineral stone residues, binders and additives and/or vegetable residues and/or animal residues and/or industrial residues comprising the following steps:
a) Establishing a mold with suitable shape and dimensions;
b) Depositing over the mold a mixture of natural and/or mineral stone residues and/or vegetable residues and/or animal residues and/or industrial residues, a corresponding binder and additive;
c) Vibrating the mixture, wherein the air contained in the mixture is eliminated, such that the compaction of the mixture is improved and, therefore, the quality of the final piece obtained;
d) Compaction of the mixture;
e) Depositing of the mold with the mixture so it rests and dries for a predetermined amount of time; and
f) De-molding of the piece with the mixture obtained outside the mold with the desired shape.

It is worth noting that the natural stone residue can be marble, granite, etc., while the industrial residues can be glass, fiberglass, mineral wool, general slag, plastic materials, such as polystyrene, polyethylene, polyurethane, polyisocyanurate. The mineral residue can consist of pearlite and vermiculite. The animal residue can be wool.

The invention is characterized particularly in that heat is applied to the mold in any of steps c), d) or e). Thus, the obtained final product has optimal properties that improve the quality of the product.

In a particularly preferred embodiment of the invention, heating is completed through at least one electric resistor arranged in one of the walls of the mold, the heating temperature being in a range between 30 and 70°C.

Another object of the invention is to provide a component piece obtained from the previously described method, comprising a mixture of natural and/or mineral stone residues coming from a quarry, and/or vegetable residues and/or animal residues and/or industrial residues, binders and additives.

Advantageously, the binder consists of a magnesium oxychloride, which is a non-toxic and non-harmful substance for workers, and furthermore non-flammable, for which the risk of danger during its handling is reduced.

Preferably, the additive used can consist of silanes.

Additionally, it is possible that the mixture used in obtaining the component piece may include at least one colorant according to the specifications of the final product.

Preferably, the mixture that makes up the component piece comprises natural and/or mineral stone residues and/or vegetable residues and/or animal residues and/or industrial residues in proportion by weight between 50-80%, binder in proportion by weight between 10-40%, and additive in proportion by weight between 5 and 10%.

In a preferred embodiment, the component piece is cube-shaped.

Other characteristics and advantages of the method and the component piece object of the present invention will become clear in light of the description of a preferred, though non-exclusive, embodiment, which, by way of a nonlimiting example, is illustrated in the accompanying drawings, wherein:

### BRIEF DESCRIPTION OF THE DRAWINGS

Figure 1 is a block diagram corresponding to the method according to the present invention;
Figure 2 is a schematic view of a mold with the mixture that incorporates heating means for heating the mixture inside; and
Figure 3 is a schematic view of a piece obtained with the mold and a plurality of pieces cut from the piece extracted from the mold.

### DESCRIPTION OF A PREFERRED EMBODIMENT

In view of the aforementioned figures and, in accordance with the numbering adopted, an example of a preferred embodiment of the invention can be observed therein, which comprises the parts and elements indicated and described in detail below.

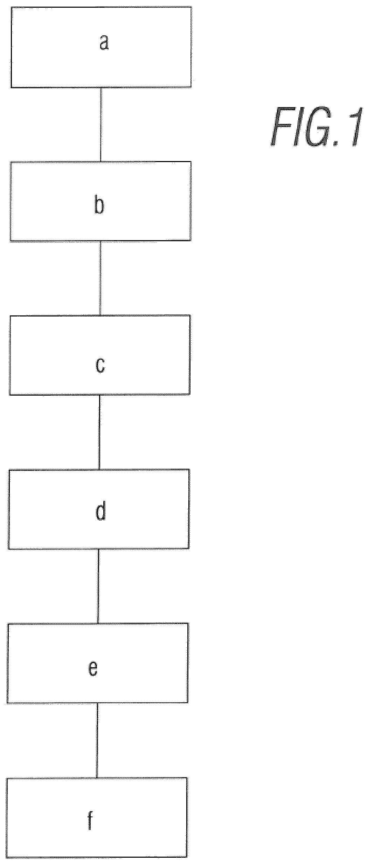

In this way, as seen in figure 1, an embodiment of a manufacturing method for component pieces, starting from the use of residual or disposable materials of natural and/or mineral stone (for example marble, granite etc.) and/or vegetable residues and/or animal residues and/or industrial residues, binders and additives comprising the following steps:
a) Establishing a mold (1) with suitable shape and dimensions, in this case the shape of a cube open on one of its faces and that can be made of any suitable material, such as aluminum, steel, plastic, glass, rubber, wood, etc.;
b) Depositing over the mold (1) a mixture of natural or mineral stone residues, a corresponding binder and additive;
c) Vibrating the mixture via a conventional vibrating device, thus it will not be described in more detail;
d) Compaction of the mixture;
e) Depositing of the mold (1) with the mixture to rest for a predetermined amount of time; and
f) De-molding of the mixture obtained outside the mold (1) with the desired shape.

It should be mentioned that the vegetable residue used can be wood, paper, cork, cotton, hemp, hay, etc.; the industrial residue can be glass, fiberglass, mineral wool, slag, polystyrene, polyethylene, polyurethane, polyisocyanurate; the mineral residue can be pearlite, vermiculite, while the material from animal residue can be wool, for example.

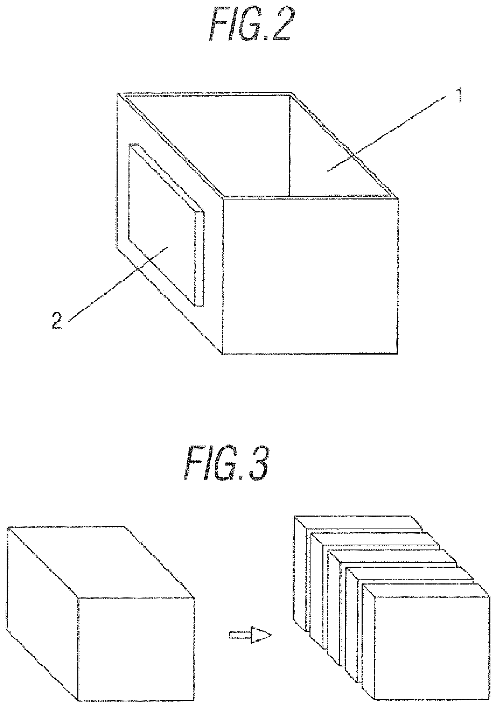

Once the piece is obtained, it is cut into slabs or sheets, as seen in figure 3, the cut being made, for example, by means of a diamond gang saw, block cutter with diamond discs or machines provided with cutting discs.

In the method, heat is applied to the mold in any of steps c), d) or e) which is completed by a series of electric resistors (2) arranged in one of the lateral walls of the mold (1), the heating temperature being comprised between 30 and 70°C. A higher temperature could excessively accelerate the drying phase, negatively affecting the curing and elaboration of the final piece.

Now making particular reference to the component piece, it comprises a mixture of natural or mineral stone residues, binders and additives wherein the binder consists of magnesium oxychloride.

Specifically, this mixture comprises residues or waste from natural and/or mineral stone in proportion by weight between 50-80%, binder in proportion by weight between 10-40%, and additive in proportion by weight between 5 and 10%.

The details, shapes, dimensions and other accessory elements used to manufacture the component piece of the invention may be conveniently substituted by others that do not diverge from the scope defined by the claims included below.

## Claims

1. A method for manufacturing component pieces, starting from natural and/or mineral stone residues, binders and additives and/or vegetable residues and/or animal residues and/or industrial residues comprising the following steps:
a) Establishing a mold with suitable shape and dimensions;
b) Depositing over the mold (1) a mixture of natural or mineral stone residues, a corresponding binder and additive;
c) Vibrating the mixture;
d) Compaction of the mixture;
e) Depositing of the mold (1) with the mixture to rest for a predetermined amount of time; and
f) De-molding of the mixture obtained outside the mold with the desired shape, **characterized in that** heat is applied to the mold which takes place in any of the previous steps c), d) or e).

2. The manufacturing method according to claim 1, **characterized in that** the heating is completed via at least one electric resistor connected to the mold (1).

3. The manufacturing method according to claim 1, **characterized in that** the electric resistor is arranged in one of the walls of the mold (1).

4. The manufacturing method according to claim 1, **characterized in that** the heating temperature is in a range between 30 and 70°C.

5. The component piece obtained from the method according to any of claims 1 to 4, **characterized in that** it comprises a mixture of natural and/or mineral stone residues, binders and additives and/or vegetable residues and/or animal residues and/or industrial residues.

6. The component piece according to claim 5, **characterized in that** the binder consists of a magnesium oxychloride.

7. The component piece according to claim 5, **characterized in that** the additive consists of silanes.

8. The component piece according to claim 5, **characterized in that** the mixture includes at least one colorant.

9. The component piece according to claim 5, **characterized in that** the mixture comprises natural and/or mineral stone residues and/or vegetable residues and/or animal residues and/or industrial residues in proportion by weight between 50-80%, binder in proportion by weight between 10-40%, and additive in proportion by weight between 5 and 10%.

10. The component piece according to claim 5, **characterized in that** it is essentially cube-shaped.

11. The component piece according to claim 5, **characterized in that** the original residue material is wood, paper, cork, cotton, hay or similar.

12. The component piece according to claim 5, **characterized in that** the mixture includes glass material.

13. The component piece according to claim 5, **characterized in that** the animal residue material consists of wool.

14. The component piece according to claim 5, **characterized in that** the industrial residue consists of glass, fiberglass, mineral wool, slag, polystyrene, polyethylene, polyurethane, polyisocyanurate or a combination thereof.

15. The component piece according to claim 5, **characterized in that** the mineral residue consists of pearlite, vermiculite or a combination thereof.
